# EUROPÄISCHE PATENTANMELDUNG

(11) **EP 3 643 730 A1**
(43) Veröffentlichungstag der Anmeldung: **29.04.2020**
(21) Anmeldenummer: 18202839.9
(22) Anmeldetag: 26.10.2018
(51) Int. Cl.: C08G 2/22, C08G 2/38, C08G 18/56, C08G 64/18, C08G 18/44

(54) **VERFAHREN ZUR HERSTELLUNG VON POLYOXYMETHYLEN-POLYOXYALKYLEN-BLOCKCOPOLYMEREN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft ein Verfahren zur Herstellung eines Polyoxymethylen-Polyoxyalkylen-Blockcopolymers umfassend der Reaktion einer polymeren Formaldehydverbindung mit Alkylenoxiden in Gegenwart eines Doppelmetallcyanid (DMC)-Katalysators und einer H-funktionelle Startersubstanz, wobei die theoretische Molmasse der polymeren Formaldehydverbindung kleiner ist als die theoretische Molmasse der H-funktionellen Startersubstanz, wobei die polymere Formaldehydverbindung wenigstens eine terminale Hydroxylgruppe aufweist, wobei die theoretische Molmasse der H-funktionellen Startersubstanz mindestens 500 g/mol beträgt. Hierbei umfasst das erfindungsgemäße Verfahren zunächst in Schritt (i) das Vorlegen einer Mischung i) umfassend den DMC-Katalysator und der H-funktionellen Startersubstanz gefolgt von der Zugabe der polymeren Formaldehydverbindung zu Mischung (i) unter Bildung einer Mischung (ii) in Schritt (ii) und der Zugabe des Alkylenoxids in Schritt (iii); wobei Schritt (ii) zeitlich simultan oder zeitlich vor Schritt (iii) erfolgt. Sie betrifft weiterhin durch ein solches Verfahren erhältliche Polyoxymethylen-Polyoxyalkylen-Blockcopolymere, sowie deren Verwendung zur Herstellung von Polyurethan-Polymeren.

## Beschreibung

Die vorliegende Erfindung beschreibt ein Verfahren zur Herstellung von Polyoxymethylen-Polyoxyalkylen-Blockcopolymeren. Sie betrifft weiterhin durch ein solches Verfahren erhältliche Polyoxymethylen-Polyoxyalkylen-Blockcopolymere sowie deren Verwendung.

Blockcopolymere enthaltend Polyoxymethylen-Einheiten neben anderen Polymerisat- und Polykondensat-Einheiten werden beispielsweise in JP 2007 211082 A, WO 2004/096746 A1, GB 807589, EP 1 418 190 A1, US 3,754,053, US 3,575,930, US 2002/0016395, und JP 04-306215 beschrieben.

US 3,575,930 beschreibt die Reaktion von Dihydroxy-terminiertem Paraformaldehyd HO-(CH₂O)ₙ-H mit n = 2-64 mit Diisocyanaten zu Isocyanat-terminierten Polyoxymethylenpolymeren, welche in der Reaktion mit Diolen zu Polyurethanverbindungen umgesetzt werden können.

JP 2007 211082 A beschreibt die Umsetzung von Polyoxyalkylen-Polyolen mit einem Äquivalentgewicht von ≥ 2500 mit Formaldehyd, Formaldehyd-Oligomeren oder Formaldehyd-Polymeren zu Polyoxymethylen-Polyoxyalkylen-Blockcopolymeren unter Anwendung von anionischen oder kationischen Polymerisationskatalysatoren. Die eingesetzten hochmolekularen Polyoxyalkylen-Polyol-Starter mit niedriger Polydispersität werden über Doppelmetallcyanid (DMC)-Katalyse hergestellt. Aufgrund des hohen Molekulargewichtes der Polyoxyalkylen-Polyole weisen die erhaltenen Polyoxymethylen-Polyoxyalkylen-Blockcopolymere ein Molekulargewicht von wenigstens > 5000 g/mol auf und sind daher weniger breit als Polyurethan-Baustein einsetzbar. Weiterhin macht die direkte Umsetzung der Polyoxyalkylen-Polyole mit den Polyoxymethylen-Polymeren über ein Schmelz-Knet-Verfahren den Einsatz von hohen Temperaturen und entsprechenden spezifischen Hochviskosapparaten (Extruder, Kneter, etc.) notwendig.

US 3,754,053 beschreibt Polyoxymethylen-Polyoxyalkylen-Blockcopolymere mit einem Molekulargewicht ≥ 10 000 g/mol. Zur Herstellung von Copolymeren mit einem inneren Polyoxymethylen-Block wird in einem erstem Schritt Trioxan zu einem Polyoxymethylen-Präpolymer umgesetzt und dieses dann in Gegenwart von z.B. NaOH als Polymerisationskatalysator mit Alkylenoxiden umgesetzt. Auch hier sind die beschriebenen Polymere aufgrund ihres hohen Molekulargewichts für Anwendungen als Polyurethanbaustein weniger gut geeignet.

In WO 2004/096746 A1 wird die Reaktion von Formaldehyd-Oligomeren mit Alkylenoxiden und/oder Isocyanaten offenbart. Bei dieser Methode werden über den beschriebenen Einsatz von Formaldehyd-Oligomeren HO-(CH₂O)ₙ-H Polyoxymethylen-Blockcopolymere mit einer relativ engen Molmassenverteilung von n = 2-19 erhalten, wobei für die Bereitstellung der Formaldehyd-Oligomere ausgehend von wässriger Formalinlösung ein zusätzlicher thermischer Abtrenn-Verfahrensschritt erforderlich ist. Die erhaltenen Formaldehyd-Oligomer-Lösungen sind hierbei nicht lagerstabil, so dass diese anschließend sofort weiterverarbeitet werden müssen. Außerdem werden in diesen Anmeldungen keine differenzierten Aktivierungsbedingungen, wie beispielsweise der Aktivierungstemperatur, der verwendeten Alkoxylierungskatalysatoren offenbart, welche auch aus sicherheitstechnischen sowie qualitätsrelevanten Gesichtspunkten für eine mögliche großtechnische Anwendung durch undefinierte Temperaturspitzen während des exothermen Polymerisationsprozesses (22.7 kcal/mol PO from M. Ionescu; Chemistry and Technology of Polyols for Polyurethanes, Rapra Techn. Ltd., 2005) nachteilig sind. Weiterhin sind über diese Methode nur Blockcopolymere mit sehr kurzen Formaldehyd-Blöcken zugänglich.

In EP 1 870 425 A1 wird ein Verfahren zu Herstellung von Polyoxyalkylen-haltigen Polyolen durch Kondensation von substituierten oder unsubstituierten Phenolstrukturen mit Formaldehyden und/oder anderen substituierten Alkanalstrukturen offenbart. Die resultierenden Phenol-Formaldehyd-Kondensate werden hierbei als Polyolstarter für die Alkoxylierung verwendet, wobei innerhalb dieser Starterverbindungen keine Oxymethylen-Wiederholungseinheiten ausgebildet werden. Weiterhin unterscheiden sich die resultierenden Eigenschaften der alkoxylierten, Aromaten-haltigen Poylole aufgrund der unterschiedlichen chemischen Struktur grundlegend von aliphatischen Polyolstrukturen.

In WO2012/091968 A1 wird ein Verfahren zur Herstellung von Polyetherolen durch Polymerisation von Alkylenoxiden an eine Starterverbindungen mithilfe von DMC Katalysatoren beansprucht. Hierbei werden als Formaldehyd-assoziierte Strukturen oligomere Phenol-Formaldehyde Kondensate als entsprechende Starter offenbart, die sich strukturell grundlegend von der Polyoxymethylen- Starterstruktur unterscheidet.

WO2015/155094 A1 offenbart ein Verfahren zur Herstellung von Polyoxymethylen-Blockcopolymeren, umfassend den Schritt der Aktivierung des DMC-Katalysators in Anwesenheit einer OH-terminierten polymeren Formaldehydverbindung mit einer definierten Menge Alkylenoxid, sowie einer optional anschließenden Polymerisation mit Alkylenoxiden, welche ggf. in Anwesenheit von weiteren Comonomeren stattfindet. Hierbei wird in einem ersten Schritt der DMC-Katalysator in Gegenwart der polymeren Formaldehyd-Starterverbindung aktiviert wird, wobei zur Aktivierung des DMC-Katalysators eine Teilmenge (bezogen auf die Gesamtmenge der bei der Aktivierung und Polymerisation eingesetzten Menge an Alkylenoxiden) von einem oder mehreren Alkylenoxiden zugesetzt wird und in einem zweiten Schritt ein oder mehrere Alkylenoxide sowie gegebenenfalls weitere Comonomere zu der aus Schritt (i) resultierenden Mischung zugesetzt werden. Dabei erfolgt die Aktivierung des DMC-Katalysators im ersten Schritt (i) bei einer Aktivierungstemperatur (Tₐₖₜ) von 20 bis 120 °C. Allerdings resultiert für dieses Verfahren eine lange Aktivierungszeit. Darüber hinaus werden auch hohe Katalysatorbeladungen von bis zu 10000 ppm offenbart, wobei diese erhöhten Katalysatormengen bereitgestellt werden müssen und auch nach Herstellung des Polyoxymethylen-Blockcopolymers für nachträgliche Anwendungen abgetrennt werden, um den Anteil des Schwermetall-haltigen Doppelmetallcyanidkatalysators zu reduzieren. Weiterhin werden auch niedermolekulare Suspensionsmittel wie Toluol oder cyclisches Propylencarbonat in diesem Verfahren verwendet, welche ebenfalls für nachfolgende Reaktionen, wie beispielsweise der Polyurethanherstellung störend wirken und somit durch teilweise aufwendige thermische Abtrennungsverfahren aus dem Produkt entfernt werden müssen.

Ausgehend vom Stand der Technik ergab sich daher die Aufgabe ein einfaches und wirtschaftlich vorteilhaftes Verfahren zur Herstellung von Polyoxymethylen-Polyoxyalkylen-Blockcopolymeren auf Basis von oligomeren und polymeren Formen des Formaldehyds als Startersubstanz zur Verfügung zu stellen, mit dem die sich aus dem Stand der Technik ergebenden Probleme überwunden werden können.

Hierbei sollte die Menge des Doppelmetallcyanid (DMC)-Katalysators reduziert sowie die Verwendung von niedermolekularen Suspensionsmitteln vermieden werden. Dabei sollten im Speziellen Suspensionsmittel verwendet werden, welche direkt mit dem resultierenden Polyoxymethylen-Polyoxyalkylen-Blockcopolymer in nachfolgenden Reaktionen als Reaktionskomponente verwendet werden können. Weiterhin war es Aufgabe der vorliegenden Erfindung die Reaktionszeit durch Reduktion der Aktivierungszeit des Doppelmetallcyanid (DMC)-Katalysators zu verkürzen.

Erfindungsgemäß gelöst wird diese Aufgabe durch ein Verfahren zur Herstellung eines Polyoxymethylen-Polyoxyalkylen-Blockcopolymers umfassend der Reaktion einer polymeren Formaldehydverbindung mit Alkylenoxiden in Gegenwart eines Doppelmetallcyanid (DMC)-Katalysators und einer H-funktionellen Startersubstanz;
wobei die theoretische Molmasse der polymeren Formaldehydverbindung kleiner ist als die theoretische Molmasse der H-funktionellen Startersubstanz;
wobei die polymere Formaldehydverbindung wenigstens eine terminale Hydroxylgruppe aufweist;
wobei die theoretische Molmasse der H-funktionellen Startersubstanz mindestens 500 g/mol beträgt;
umfassend folgende Schritte:
(i) Vorlegen einer Mischung i) umfassend den DMC-Katalysator und die H-funktionelle Startersubstanz;
(ii) Zugabe der polymeren Formaldehydverbindung zu Mischung i) unter Bildung einer Mischung ii);
(iii) Zugabe des Alkylenoxids;
wobei Schritt (ii) zeitlich simultan oder zeitlich vor Schritt (iii) erfolgt.

Weitere Gegenstände der vorliegenden Erfindung sind die über das erfindungsgemäße Verfahren erhältlichen Polyoxymethylen-Polyoxyalkylen-Blockcopolymere, deren Verwendung sowie Polyurethan-Polymere enthaltend die erfindungsgemäßen Polyoxymethylen-Polyoxyalkylen-Blockcopolymere.

Die Verwendung des Worts ein im Zusammenhang mit zählbaren Größen ist hierbei und im Folgenden nur dann als Zahlwort zu verstehen, wenn dies aus dem Zusammenhang hervorgeht (bspw. durch die Formulierung "genau ein"). Ansonsten umfassen Ausdrücke wie "ein Alkylenoxid", "eine polymere Formaldehydverbindung" etc. immer auch solche Ausführungsformen, in denen zwei oder mehr Alkylenoxide, zwei oder mehr polymere Formaldehydverbindungen etc. eingesetzt werden.

Nachfolgend wird die Erfindung im Detail erläutert. Verschiedene Ausführungsformen sind dabei beliebig miteinander kombinierbar, solange sich für den Fachmann aus dem Kontext nicht eindeutig das Gegenteil ergibt.

Polyoxymethylen-Blockcopolymere im Sinne der Erfindung bezeichnen polymere Verbindungen, die mindestens einen Polyoxymethylen-Block sowie mindestens einen zusätzlichen oligomeren Block (z.B. Polyoxyalkylen- bzw. Polyoxyalkylencarbonat-Blöcke) enthalten und vorzugsweise ein im vierstelligen Bereich liegendes Molekulargewicht nicht überschreiten.

In einer Ausführungsform des erfindungsgemäßen Verfahrens weist das Polyoxymethylen-Polyoxyalkylen-Blockcopolymers ein zahlenmittleres Molekulargewicht von 1000 g/mol bis 10000 g/mol, bevorzugt von 1000 g/mol bis 8400 g/mol auf, wobei das zahlenmittlere Molekulargewicht mittels Gel-Permeations-Chromatographie (GPC) in Anlehnung an DIN 55672-1: "Gelpermeationschromatographie, Teil 1 - Tetrahydrofuran als Elutionsmittel" bestimmt wurde, wobei Polystyrolproben bekannter Molmasse zur Kalibrierung verwendet wurden.

Die erhaltenen Polyoxymethylen-Blockcopolymere bieten gegenüber existierenden Polymeren eine Reihe von Vorteilen. So können bestimmte physikalische Eigenschaften wie Glasübergangstemperaturen, Schmelzbereiche, Viskositäten und Löslichkeiten, etc. über die Länge der Polyoxymethylen-Blöcke im Verhältnis zu den oligomeren Polyoxyalkylen-Blöcken gezielt angesteuert werden.

Gegenüber Polyoxymethylen-Homopolymeren gleichen Molekulargewichts ist die Teilkristallinität in den erfindungsgemäßen Polyoxymethylen-Polyoxyalkylen-Blockcopolymeren typischerweise herabgesetzt, was üblicherweise ebenfalls zu einer Herabsetzung von Glasübergangstemperaturen, Schmelzpunkten und Viskositäten, etc. führt. Die Anwesenheit von zusätzlichen Polyoxyalkylenblöcken führt weiterhin typischerweise zu einer deutlichen Erhöhung der chemischen und thermischen Stabilität. Zudem weisen die erhaltenen Polyoxymethylen-Polyoxyalkylen-Blockcopolymere im Allgemeinen gute Löslichkeiten in diversen Lösungsmitteln auf, sind zumeist leicht und ohne Massenverlust aufschmelzbar oder liegen schon bei niedrigen Temperaturen im flüssigen Zustand vor. Gegenüber Polyoxymethylen-Homopolymeren zeigen die Polyoxymethylen- Polyoxyalkylen-Blockcopolymere somit eine deutlich bessere Verarbeitbarkeit.

Gegenüber Polyetherpolyolen gleichen Molekulargewichts ist der Anteil an PolyoxyalkylenEinheiten, die aus den entsprechenden Alkylenoxiden hergestellt werden, um den Polyoxymethylen-Anteil verringert, was zu einer vorteilhaften Wirtschaftlichkeit des Produktes beiträgt. Diverse physikalische Eigenschaften wie Glasübergangstemperaturen, Schmelzbereiche, Viskositäten, Löslichkeit, etc. können für ein gegebenes Molekulargewicht über die Länge der Polyoxymethylen-Blöcke im Verhältnis zu den Polyoxyalkylen-Blöcken, sowie über das Molekulargewicht der eingesetzten polymeren Formaldehydverbindung (Polyoxymethylen-Block), gezielt angesteuert werden. Die synthetisch variable Molekülstruktur der erhaltenen Polyoxymethylen-Polyoxyalkylen-Blockcopolymere ermöglicht zudem die Schaffung maßgeschneiderter "hart-weich"-Segmente auf molekularer Ebene. Gegenüber statistischen Polyoxymethylen-Polyoxyalkylen-Copolymeren weisen die erhaltenen Polyoxymethylen-Polyoxyalkylen-Blockcopolymere aufgrund ihrer Segmentstruktur eine höhere innere Ordnung auf.

Dies kann in vorteilhaften physikalischen Eigenschaften insbesondere von Folgeprodukte dieser Polymere resultieren und somit neue Anwendungen ermöglichen.

Über das erfindungsgemäße Verfahren können insbesondere Polyoxymethylen- Polyoxyalkylen-Blockcopolymere erhalten werden, welche eine A-B-A Blockstruktur umfassend einen inneren Polyoxymethylen-Block (B) und äußere oligomere Polyoxyalkylen Blöcke (A) aufweisen. Es ist erfindungsgemäß ebenso möglich, dass Formaldehydverbindungen mit einer Hydroxy-Endgruppen-Funktionalität F > 2 eingesetzt werden, worüber sich folglich homologe Blockstrukturen B(-A)y mit einer Anzahl y >2 an äußeren oligomeren Blöcken (A), die entsprechend aus der Funktionalität der eingesetzten Formaldehydverbindung resultiert, darstellen lassen. Ebenso ist es grundsätzlich möglich, dass Formaldehydverbindungen mit einer Funktionalität F < 2 eingesetzt werden, dies können beispielweise auch lineare Formaldehydverbindungen mit F = 1 sein, welche an einem Kettenende mit einer Schutzgruppe oder durch andere chemische Reste substituiert sind.

Ein Polyoxymethylen-Block im Sinne der Erfindung bezeichnet eine polymere Struktureinheit - (CH2-O-)x wobei x für eine ganze Zahl ≥ 2 steht, die mindestens eine an zwei Sauerstoffatome gebundene CH2-Gruppe enthält, welche über mindestens eines der Sauerstoffatome mit weiteren Methylengruppen oder anderen polymeren Strukturen verbunden ist. Bevorzugt enthalten Polyoxymethylen-Blöcke -(CH2-O-)x durchschnittlich x ≥ 2 bis x ≤ 1000, mehr bevorzugt durchschnittlich x ≥ 2 bis x ≤ 400 und besonders bevorzugt durchschnittlich x ≥ 8 bis x ≤ 100 Oxymethylen-Einheiten. Im Sinne der Erfindung werden unter einem Polyoxymethylen-Block auch solche Blöcke verstanden, welche geringe Anteile weiterer monomerer und/oder oligomerer Einheiten enthalten, im Allgemeinen weniger als 25 mol% bezogen auf die Gesamtmenge der im Block enthaltenen Monomereneinheiten.

Polyoxyalkylen-Blöcke im Sinne der Erfindung sind im Sinne der vorliegenden Erfindung auch solche Blöcke, in welche (geringe) Anteile weiterer Comonomere, im Allgemeinen weniger als 50 mol-%, bevorzugt weniger als 25 mol-%, bezogen auf die Gesamtmenge aller im oligomeren Block vorliegenden Wiederholungseinheiten, einpolymerisiert sind.

Der Begriff "Alkyl" umfasst allgemein im Zusammenhang der gesamten Erfindung Substituenten aus der Gruppe n-Alkyl wie Methyl, Ethyl oder Propyl, verzweigtes Alkyl und/oder Cycloalkyl. Der Begriff "Aryl" umfasst allgemein im Zusammenhang der gesamten Erfindung Substituenten aus der Gruppe einkernige Carbo- oder Heteroarylsubstituenten wie Phenyl und/oder mehrkernige Carbo- oder Hetero-aryl-substituenten, die gegebenenfalls mit weiteren Alkylgruppen und/oder Heteroatomen wie Stickstoff, Sauerstoff, Silizium, Schwefel oder Phosphor substituiert sein können. Die Reste R1, R2, R3 und/oder R4 können innerhalb einer Wiederholungseinheit so miteinander verknüpft sein, dass sie zyklische Strukturen ausbilden, wie beispielsweise einen Cycloalkyl-Rest, der über zwei benachbarte Kohlenstoffatome in die Polymerkette eingebaut ist.

### Polymere Formaldehydverbindung

Als polymere Formaldehydverbindung für das erfindungsgemäße Verfahren eignen sich grundsätzlich solche oligomeren und polymeren Formen des Formaldehyds, welche wenigstens eine terminale Hydroxylgruppe zur Reaktion mit den Alkylenoxiden und den gegebenenfalls weiteren Comonomeren aufweisen. Unter dem Begriff "terminale Hydroxylgruppe" wird erfindungsgemäß insbesondere eine terminale Halbacetal-Funktionalität verstanden, welche sich als Strukturmerkmal über die Polymerisation des Formaldehyds ergibt. Beispielsweise können die Starterverbindungen Oligomere und Polymere des Formaldehyds der allgemeinen Formel HO-(CH₂O)ₙ-H sein, wobei n für eine ganze Zahl ≥ 2 steht und wobei polymeres Formaldehyd typischerweise n > 8 Wiederholungseinheiten aufweist.

Für das erfindungsgemäße Verfahren geeignete polymere Formaldehydverbindungen weisen im Allgemeinen Molmassen von 62 bis 30000 g/mol, bevorzugt von 62 bis 12000 g/mol, besonders bevorzugt von 242 bis 6000 g/mol und ganz besonders bevorzugt von 242 bis 3000 g/mol auf und umfassen von 2 bis 1000, bevorzugt von 2 bis 400, besonders bevorzugt von 8 bis 200 und ganz besonders bevorzugt von 8 bis 100 Oxymethylen-Wiederholungseinheiten n. Die im erfindungsgemäßen Verfahren eingesetzten Verbindungen haben typischerweise eine Funktionalität (F) von 1 bis 3, in bestimmten Fällen können diese aber auch höherfunktionell sein, also eine Funktionalität > 3 besitzen. Bevorzugt werden im erfindungsgemäßen Verfahren offenkettige polymere Formaldehydverbindungen mit terminalen Hydroxylgruppen eingesetzt, welche eine Funktionalität von 1 bis 10, bevorzugt von 1 bis 5, besonders bevorzugt von 2 bis 3 haben. Ganz besonders bevorzugt werden im erfindungsgemäßen Verfahren lineare polymere Formaldehydverbindungen eingesetzt, welche eine Funktionalität von 2 aufweisen. Die Funktionalität F entspricht der Anzahl an OH-Endgruppen pro Molekül.

Die Herstellung der polymeren Formaldehydverbindungen, welche für das erfindungsgemäße Verfahren eingesetzt werden, kann nach bekannten Verfahren erfolgen (vgl. z.B. M. Haubs et. al., 2012, Polyoxymethylenes, Ullmann's Encyclopedia of Industrial Chemistry; G. Reus et. al., 2012, Formaldehyde, ibid). Die Formaldehydverbindungen können im erfindungsgemäßen Verfahren grundsätzlich auch in Form eines Copolymers eingesetzt werden, wobei als Comonomere neben Formaldehyd beispielsweise 1,4-Dioxan, oder 1,3-Dioxolan einpolymerisiert sind. Weitere geeignete Formaldehyd-Copolymere für das erfindungsgemäße Verfahren sind Copolymere des Formaldehyds sowie des Trioxans mit cyclischen und/oder linearen Formalen, wie beispielsweise Butandiolformal, oder Epoxiden. Es ist ebenfalls denkbar, dass als Comonomere höhere homologe Aldehyde, wie beispielweise Acetaldehyd, Propionaldehyd, etc., in das Formaldehyd-Polymer eingebaut sind. Ebenfalls ist es denkbar, dass erfindungsgemäße Formaldehydverbindungen wiederum ausgehend von H-funktionellen Starterverbindungen hergestellt werden, insbesondere lassen sich hierbei durch den Einsatz von mehrwertigen Verbindungen polymere Formaldehydverbindungen mit einer Hydroxy-Endgruppen-Funktionalität F > 2 erhalten (vgl. z.B. WO 1981001712 A1, Bull. Chem. Soc. J., 1994, 67, 2560-2566, US 3436375, JP 03263454, JP 2928823).

Bekanntlich polymerisiert Formaldehyd bereits durch die Gegenwart geringer Wasserspuren. In wässriger Lösung bildet sich daher in Abhängigkeit von Konzentration und Temperatur der Lösung ein Gemisch von Oligomeren und Polymeren unterschiedlicher Kettenlängen, welche mit molekularem Formaldehyd und Formaldehyd-Hydrat im Gleichgewicht stehen. Sogenanntes Paraformaldehyd fällt hierbei als ein weißer, schlecht-löslicher Feststoff, aus der Lösung aus und stellt in der Regel ein Gemisch linearer Formaldehyd-Polymere mit n = 8 bis 100 Oxymethylen-Wiederholungseinheiten dar.

Ein Vorteil des erfindungsgemäßen Verfahrens liegt insbesondere darin, dass polymeres Formaldehyd bzw. sogenanntes Paraformaldehyd, welches kommerziell und kostengünstig erhältlich ist, direkt als Reaktand eingesetzt werden kann, ohne dass hierbei zusätzliche vorbereitende Schritte nötig sind. In einer vorteilhaften Ausführungsform der Erfindung wird daher Paraformaldehyd als Reaktand eingesetzt. Insbesondere lassen sich über das Molekulargewicht und die Endgruppenfunktionalität der polymeren Formaldehydverbindung Polyoxymethylen-Blöcke mit definiertem Molgewicht und Funktionalität in das Produkt einbringen.

Vorteilhafterweise kann hierbei im erfindungsgemäßen Verfahren die Länge des Polyoxymethylen-Blocks einfach über das Molekulargewicht der eingesetzten Formaldehydverbindung gesteuert werden. Vorzugsweise werden hierbei lineare Formaldehydverbindungen der allgemeinen Formel HO-(CH₂O)ₙ-H, wobei n für eine ganze Zahl ≥ 2 steht, bevorzugt mit n = 2 bis 1000, besonders bevorzugt mit n = 2 bis 400 und ganz besonders bevorzugt mit n = 8 bis 100, mit zwei terminalen Hydroxylgruppen eingesetzt. Insbesondere können als Starterverbindung auch Gemische von polymeren Formaldehyd-Verbindungen der Formel HO-(CH₂O)ₙ-H mit jeweils unterschiedlichen Werten für n eingesetzt werden. In einer vorteilhaften Ausführungsform enthalten die eingesetzten Gemische von polymeren Formaldehydverbindungen der Formel HO-(CH₂O)ₙ-H wenigstens 1 Gew-%, bevorzugt wenigstens 5 Gew.-% und besonders bevorzugt wenigstens 10 Gew.-% an polymeren Formaldehyd-Verbindungen mit n ≥ 20.

In einer bevorzugten Ausführungsform des erfindungsgemäßen Verfahrens weist die polymere Formaldehydverbindung 2 Hydroxylgruppen und 8 bis 100 Oxymethylen-Wiederholungseinheiten (n) oder 3 Hydroxylgruppen und 8 bis 100 Oxymethylen-Wiederholungseinheiten (n) auf.

### Alkylenoxid

Als Epoxid (Alkylenoxid) werden für die Herstellung der Polyoxymethylen-Blockcopolymere Verbindungen der allgemeinen Formel (I): 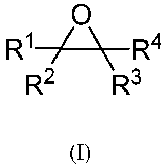 eingesetzt, wobei R¹, R², R³ und R⁴ unabhängig voneinander für Wasserstoff oder einen gegebenenfalls zusätzliche Heteroatome wie Stickstoff, Sauerstoff, Silizium, Schwefel oder Phosphor enthaltenden Alkyl- oder Arylrest stehen und ggf. so miteinander verknüpft sein können, dass sie zyklische Strukturen ausbilden, wie beispielsweise ein Cycloalkylenoxid.

Im Rahmen des erfindungsgemäßen Verfahrens können grundsätzlich solche Alkylenoxide eingesetzt werden, welche sich für die Polymerisation in Gegenwart eines DMC-Katalysators eignen. Werden verschiedene Alkylenoxide verwendet, so können diese entweder als Mischung oder nacheinander zudosiert werden. Bei letzterer Dosierweise können die Polyetherketten des hierüber erhaltenen Polyoxymethylen-Polyoxyalkylen-Blockcopolymers ihrerseits ebenfalls eine Blockstruktur aufweisen.

Allgemein können für das erfindungsgemäße Verfahren Alkylenoxide (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C1-C24-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxypropyltrlisopropoxysilan. Vorzugsweise ist das Epoxid der allgemeinen Formel (I) ein terminales Epoxid, wobei R1, R2 und R3 für Wasserstoff stehen, und R4 Wasserstoff, ein gegebenenfalls zusätzliche Heteroatome wie Stickstoff, Sauerstoff, Silizium, Schwefel oder Phosphor enthaltender Alkyl- oder Arylrest sein kann und sich in verschiedenen Wiederholungseinheiten unterscheiden kann. Vorzugsweise werden als Alkylenoxide Ethylenoxid und/oder Propylenoxid, insbesondere Propylenoxid eingesetzt.

### Doppelmetallcyanid (DMC)-Katalysator

Die in dem erfindungsgemäßen Verfahren vorzugsweise einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Doppelmetallcyanid (DMC)-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonaten bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert-Butanol) noch einen Polyether mit einem zahlenmittlerem Molekulargewicht größer als 500 g/mol enthalten.

Die erfindungsgemäß einsetzbaren DMC-Katalysatoren werden vorzugsweise erhalten, indem man
(1.) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(2.) wobei im zweiten Schritt der Feststoff aus der aus (a) erhaltenen Suspension durch bekannte Techniken (wie Zentrifugation oder Filtration) abgetrennt wird,
(3.) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(4.) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,
und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäß einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Zinkchlorid-Lösung (bevorzugt im Überschuss bezogen auf das Metallcyanidsalz) und Kaliumhexacyanocobaltat gemischt und anschließend Dimethoxyethan (Glyme) oder tert-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze weisen bevorzugt eine Zusammensetzung nach der allgemeinen Formel (II) auf,

M(X)ₙ (II),

wobei
M ausgewählt ist aus den Metallkationen Zn²⁺, Fe²⁺, Ni²⁺, Mn²⁺, Co²⁺, Sr²⁺, Sn²⁺, Pb²⁺ und, Cu²⁺, bevorzugt ist M Zn²⁺, Fe²⁺, Co²⁺ oder Ni²⁺,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat und
n ist 2, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (III) auf,

Mᵣ(X)₃ (III),

wobei
M ausgewählt ist aus den Metallkationen Fe³⁺, Al³⁺, Co³⁺ und Cr³⁺,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanate Isocyanat, Isothiocyanat, Carboxylat, Oxalat und Nitrat;
r ist 2, wenn X = Sulfat, Carbonat oder Oxalat und
r ist 1, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (IV) auf,

M(X)ₛ (IV),

wobei
M ausgewählt ist aus den Metallkationen Mo⁴⁺, V⁴⁺ und W⁴⁺,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat und
s ist 4, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (V) auf,

M(X)t (V),

wobei
M ausgewählt ist aus den Metallkationen Mo⁶⁺ und W⁶⁺,
X umfasst ein oder mehrere (d.h. verschiedene) Anionen, vorzugsweise Anionen ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat und
t ist 6, wenn X = Halogenid, Hydroxid, Carboxylat, Cyanat, Thiocyanat, Isocyanat, Isothiocyanat oder Nitrat.

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze weisen bevorzugt eine Zusammensetzung nach der allgemeinen Formel (VI) auf

(Y)ₐ M'(CN)_{b} (A)_{c} (VI),

wobei
M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II), Y ausgewählt ist aus einem oder mehreren Metallkationen der Gruppe bestehend aus Alkalimetall (d.h. Li⁺, Na⁺, K⁺, Rb⁺)und Erdalkalimetall (d.h. Be²⁺, Mg²⁺, Ca²⁺, Sr²⁺, Ba²⁺), A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).

Bevorzugte Doppelmetallcyanid-Verbindungen, die in den erfindungsgemäß einsetzbaren DMC-Katalysatoren enthalten sind, sind Verbindungen mit Zusammensetzungen nach der allgemeinen Formel (VII)

Mₓ[M'ₓ,(CN)_{y}]_{z} (VII),

worin M wie in den Formeln (I) bis (IV) und
M' wie in Formel (V) definiert ist, und
x, x', y und z ganzzahlig sind und so gewählt, dass die Elektronenneutralität der Doppelmetallcyanidverbindung gegeben ist.

Vorzugsweise ist
x = 3, x'= 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zink-hexacyanoiridat(III), Zinkhexacyanoferrat(III) und Kobalt(II)hexacyanokobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt kann Zinkhexacyanokobaltat(III) verwendet werden.

Die bei der Herstellung der DMC-Katalysatoren zusetzbaren organischen Komplexliganden sind beispielsweise in US-A 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert-butylether, Diethylenglykol-mono-tert-butylether, Tripropylenglykolmono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert-butylether und 3-Methyl-3-oxetan-methanol.

Optional werden in der Herstellung der erfindungsgemäß einsetzbaren DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, α,β-ungesättigten Carbonsäureester oder ionische oberflächen- bzw. grenzflächenaktiven Verbindungen eingesetzt.

Bevorzugt werden bei der Herstellung der erfindungsgemäß einsetzbaren DMC-Katalysatoren die wässrigen Lösungen des Metallsalzes (z.B. Zinkchlorid) im ersten Schritt im stöchiometrischen Überschuss (mindestens 50 Mol-%) bezogen auf das Metallcyanidsalz eingesetzt. Dies entspricht mindestens einem molaren Verhältnis von Metallsalz zu Metallcyanidsalz von 2,25 zu 1,00. Das Metallcyanidsalz (z.B. Kaliumhexacyanokobaltat) wird in Gegenwart des organischen Komplexliganden (z.B. tert-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators, wie beispielsweise in WO-A 01/39883 beschrieben.

Im zweiten Schritt kann die Isolierung des Feststoffs (d.h. die Vorstufe des Katalysators) aus der Suspension durch bekannte Techniken, wie Zentrifugation oder Filtration, erfolgen.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäß einsetzbaren Katalysator entfernt werden. Bevorzugt liegt die Menge des organischen Komplexliganden in der wässrigen Waschlösung zwischen 40 und 80 Gew.%, bezogen auf die Gesamtlösung.

Optional wird im dritten Schritt der wässrigen Waschlösung eine weitere komplexbildende Komponente, bevorzugt im Bereich zwischen 0,5 und 5 Gew.%, bezogen auf die Gesamtlösung, zugefügt.

Außerdem ist es vorteilhaft, den isolierten Feststoff mehr als einmal zu waschen. Vorzugsweise wird in einem ersten Waschschritt (3.-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäß einsetzbaren Katalysator zu entfernen. Besonders bevorzugt liegt die Menge des ungesättigten Alkohols in der wässrigen Waschlösung zwischen 40 und 80 Gew.%, bezogen auf die Gesamtlösung des ersten Waschschritts. In den weiteren Waschschritten (3.-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus ungesättigtem Alkohol und weiterer komplexbildender Komponente (bevorzugt im Bereich zwischen 0,5 und 5 Gew.%, bezogen auf die Gesamtmenge der Waschlösung des Schrittes (3.-2)), als Waschlösung eingesetzt und der Feststoff damit einmal oder mehrmals, vorzugsweise einmal bis dreimal gewaschen.

Der isolierte und gegebenenfalls gewaschene Feststoff kann anschließend, gegebenenfalls nach Pulverisierung, bei Temperaturen von 20 - 100°C und bei Drücken von 0,1 mbar bis Normaldruck (1013 mbar) getrocknet werden.

Ein bevorzugtes Verfahren zur Isolierung der erfindungsgemäß einsetzbaren DMC-Katalysatoren aus der Suspension durch Filtration, Filterkuchenwäsche und Trocknung wird in WO-A 01/80994 beschrieben.

Der DMC-Katalysator wird vorzugsweise in einer Menge eingesetzt, so dass der Gehalt an DMC-Katalysator im resultierenden Reaktionsprodukt 100 bis 800 ppm, bevorzugt von 200 bis 700 ppm, bezogen auf die Summe der Massen der polymeren Formaldehydverbindung, des Alkylenoxids und der H-funktionellen Startersubstanz, d.h. des Reaktionsproduktes beträgt.

Ein Charakteristikum des DMC-Katalysators ist die spezifische "catch-up" Kinetik (M. Ionescu; Chemistry and Technology of Polyols for Polyurethanes 2nd Edition, Rapra Techn. Ltd., 2016 Abschnitt 5.1), wobei für Gemische aus H-funktionellen Startersubstanzen aus einem niedrigen Äquivalentgewicht und einem hohen Äquivalentgewicht, die Alkoxylierung, im Speziellen die Propoxylierung, bevorzugt an der H-funktionellen Startersubstanz mit dem niedrigeren Äquivalentgewicht erfolgt.

### H-funktionelle Startersubstanz

Die H-funktionellen Startersubstanzen weisen im Allgemeinen eine OH-Funktionalität (d.h. Anzahl an für die Polymerisation aktiven H-Atomen pro Molekül) von 1 bis 8, bevorzugt von 2 bis 6 und besonders bevorzugt von 2 bis 4 auf. Die H-funktionellen Startersubstanzen werden entweder einzeln oder als Gemisch aus mindestens zwei H-funktionellen Startersubstanzen eingesetzt.

Für das erfindungsgemäße Verfahren können als H-funktionelle Startersubstanzen ("Starter") Verbindungen mit für die Alkoxylierung aktiven H-Atomen eingesetzt werden, die eine theoretische Molmasse von ≥ 500 g/mol, bevorzugt von 600 bis 6000 g/mol und besonders bevorzugt von 700 bis 5000 g/mol aufweisen.

Im erfindungsgemäßen Verfahren werden H-funktionellen Startersubstanz mit einer theoretischen Molmasse von mindestens 500 g/mol, bevorzugt von 600 g/mol bis 5000 g/mol und besonders bevorzugt von 750 g/mol bis 4000 g/mol verwendet, wobei die theoretische Molmasse der polymeren Formaldehydverbindung kleiner als die theoretische Molmasse der H-funktionellen Startersubstanz ist. Dies hat durch die charakteristische "catch-up" Kinetik des erfindungsgemäß verwendeten DMC-Katalysators die Konsequenz, dass bevorzugt die polymere Formaldehydverbindung alkoxyliert wird.

Für die Alkoxylierung aktive Gruppen mit aktiven H-Atomen sind beispielsweise -OH, -NH₂ (primäre Amine), -NH- (sekundäre Amine), -SH und -CO₂H, bevorzugt sind -OH und -NH₂, besonders bevorzugt ist -OH.

Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF® der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C₁-C₂₄ Alkyl-Fettsäureester, die im Mittel mindestens 2 OH-Gruppen pro Molekül enthalten, eingesetzt.

In einer Ausführungsform des erfindungsgemäßen Verfahrens ist die H-funktionellen Startersubstanz eine oder mehrere Verbindung(en) ist und ausgewählt wird aus der Gruppe bestehend aus Polyoxyalkylenpolyol Polyetherpolyol, Polyesterpolyol, Polycarbonatpolyol, Polyetherpolyesterpolyol, Polyethercarbonatpolyol, Polyetherpolyestercarbonatpolyol, bevorzugt ein Polyetherpolyol.

### Polyetherpolyol

Die H-funktionellen Startersubstanzen können auch aus der Substanzklasse der Polyetherpolyole ausgewählt sein, insbesondere solchen mit einem zahlenmittleren Molekulargewicht Mn im Bereich von 500 bis 4000 g/mol bevorzugt von 750 g/mol bis 3500 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Covestro AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

### Polyesterpolyol

Die H-funktionellen Startersubstanzen können auch aus der Substanzklasse der Polyesterpolyole ausgewählt sein, insbesondere solchen mit einem Molekulargewicht Mn im Bereich von 500 bis 4500 g/mol. Als Polyesterpolyole können mindestens difunktionelle Polyester eingesetzt werden. Bevorzugt bestehen Polyesterpolyole aus alternierenden Säure- und Alkoholeinheiten. Als Säurekomponenten können z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydro-phthalsäure¬anhydrid oder Gemische aus den genannten Säuren und/oder Anhydride eingesetzt werden. Als Alkoholkomponenten werden z.B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Bevorzugt werden Polyetherpolyole mit Mn = 150 bis 2000 g/mol zur Herstellung der Polyesteretherpolyole eingesetzt.

### Polycarbonatdiol

Des Weiteren können als H-funktionelle Startersubstanzen Polycarbonatdiole eingesetzt werden, insbesondere solche mit einem Molekulargewicht Mn im Bereich von 500 bis 4500 g/mol, vorzugsweise 500 bis 2500 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen® C-Typen der CovestroAG verwendet werden, wie z.B. Desmophen® C 1100 oder Desmophen® C 2200.

### Polyethercarbonatpolyole und/oder Polyetherestercarbonatpolyole

In einer weiteren Ausführungsform der Erfindung können Polyethercarbonatpolyole und/oder Polyetherestercarbonatpolyole als H-funktionelle Startersubstanzen eingesetzt werden. Insbesondere können Polyetherestercarbonatpolyole eingesetzt werden. Diese als H-funktionelle Startersubstanzen eingesetzten Polyethercarbonatpolyole und/oder Polyetherestercarbonatpolyole können hierzu in einem separaten Reaktionsschritt zuvor hergestellt werden.

### Polyoxymethylen-Polyoxyalkylen-Blockcopolymer (A)

In einer Ausführungsform des erfindungsgemäßen Verfahrens ist die H-funktionellen Startersubstanz ein Polyetherpolyol ist, wobei das Polyetherpolyol ein Polyoxymethylen-Polyoxyalkylen-Blockcopolymer (A) ist.

In einer bevorzugten Ausführungsform wird das Polyoxymethylen-Polyoxyalkylen-Blockcopolymer (A) durch Umsetzung einer polymeren Formaldehydverbindung (A) mit Alkylenoxiden (A) in Gegenwart eines Doppelmetallcyanid (DMC)-Katalysators (A) hergestellt.

Hierbei wird das Polyoxymethylen-Polyoxyalkylen-Blockcopolymer (A) zunächst hergestellt und kann nach optionaler Abtrennung des Lösungsmittels, wobei eine Abtrennung bevorzugt ist direkt als H-funktionelle Starterverbindung im erfindungsgemäßen Verfahren zur Herstellung des Polyoxymethylen-Polyoxyalkylen-Blockcopolymer eingesetzt werden.

In einer bevorzugten Ausführungsform weist das Polyoxymethylen-Polyoxyalkylen-Blockcopolymer (A) eine identische Funktionalität wie das Polyoxymethylen-Polyoxyalkylen-Blockcopolymer auf und und das zahlenmittlere Molekulargewicht des Polyoxymethylen-Polyoxyalkylen-Blockcopolymers (A) um bis zu 20 %, bevorzugt 10% und besonders bevorzugt von 5 % der des Polyoxymethylen-Polyoxyalkylen-Blockcopolymers abweicht, wobei das zahlenmittlere Molekulargewicht mittels Gel-Permeations-Chromatographie (GPC) in Anlehnung an DIN 55672-1: "Gelpermeationschromatographie, Teil 1 - Tetrahydrofuran als Elutionsmittel" bestimmt wurde, wobei Polystyrolproben bekannter Molmasse zur Kalibrierung verwendet wurden. Durch diese bevorzugte Ausführungsform entfällt eine zusätzliche Lagerung für das Polyoxymethylen-Polyoxyalkylen-Blockcopolymer (A), wodurch ein vereinfachtes Verfahren resultiert.

### Polymere Formaldehydverbindung (A)

In einer Ausführungsform des erfindungsgemäßen Verfahrens wird die polymere Formaldehydverbindung (A) verwendet, wobei diese wie die erfindungsgemäße polymere Formaldehydverbindung definiert ist.

### Alkylenoxid (A)

In einer Ausführungsform des erfindungsgemäßen Verfahrens wird das Alkylenoxid (A) verwendet, wobei dieses wie das erfindungsgemäße Alkylenoxid definiert ist. In einer bevorzugten Ausführungsform ist das Alkylenoxid Ethylenoxid und/oder Propylenoxid, besonders bevorzugt Propylenoxid.

### Doppelmetallcyanid (DMC)-Katalysators (A) und (B)

In einer Ausführungsform des erfindungsgemäßen Verfahrens wird der Doppelmetallcyanid (DMC)-Katalysators (A) und optional (B) verwendet, wobei diese wie der erfindungsgemäße Doppelmetallcyanid (DMC)-Katalysator definiert sind.

In einer bevorzugten Ausführungsform des erfindungsgemäßen Verfahrens umfasst der Doppelmetallcyanid (DMC)-Katalysator den Doppelmetallcyanid (DMC)-Katalysator (A) und optional einem Doppelmetallcyanid (DMC)-Katalysator (B), wobei in einer besonders bevorzugten Ausführungsform des erfindungsgemäßen Verfahrens das Massenverhältnis des Doppelmetallcyanid (DMC)-Katalysators (A) bezogen auf die Summe des Massen von Doppelmetallcyanid (DMC)-Katalysator (A) und Doppelmetallcyanid (DMC)-Katalysator (B) 40 Gew.-% bis 100 Gew.-% beträgt.

In einer weiteren bevorzugten Ausführungsform umfasst der Doppelmetallcyanid (DMC)-Katalysator den Doppelmetallcyanid (DMC)-Katalysator (A) und den Doppelmetallcyanid (DMC)-Katalysator (B) und der Doppelmetallcyanid (DMC)-Katalysator (B) wird zu dem Polyoxymethylen-Polyoxyalkylen-Blockcopolymer (A) gemäß Anspruch hinzugegeben. Hierdurch wird die Aktivierungszeit (tₐₖₜ) für das erfindungsgemäßen Herstellungsverfahren der Polyoxymethylen-Polyoxyalkylen-Blockcopolymer deutlich reduziert sowie die Polydispersität dieser Blockcopolymer der resultierenden Blockcopolymere reduziert. Als Aktivierungszeit (tₐₖₜ) wird im Sinne des erfindungsgemäßen Verfahrens die Zeitspanne zwischen Erreichen der Solltemperatur (t0) und einsetzenden Alkoxylierungsreaktion (t1) verstanden, wobei unter Zeitpunkt (t0) das Erreichens einer konstanten Temperatur und Drucks nach vollständiger Zugabe des Alkylenoxids in Schritt (iii) und des Einsetzens der exothermen Alkoxylierungsreaktion im Reaktor verbunden mit gleichzeitigem Druckabfall zum Zeitpunkt (t1) verstanden wird.

In einer besonders bevorzugten Ausführungsform des erfindungsgemäßen Verfahrens beträgt das Massenverhältnis des Doppelmetallcyanid (DMC)-Katalysators (A) bezogen auf die Summe des Massen von Doppelmetallcyanid (DMC)-Katalysator (A) und Doppelmetallcyanid (DMC)-Katalysator (B) 30 Gew.-% bis 90 Gew.-%, bevorzugt von 40 Gew.-% bis 70 Gew.-%.

Im erfindungsgemäßen Verfahren erfolgt in Schritt (i) das Vorlegen einer Mischung i) umfassend den DMC-Katalysator und die H-funktionelle Startersubstanz gefolgt von Schritt ii) der Zugabe der polymeren Formaldehydverbindung zu Mischung (i) unter Bildung einer Mischung (ii) sowie in Schritt (iii) der Zugabe des Alkylenoxids, wobei Schritt (ii) zeitlich simultan oder zeitlich vor Schritt (iii) erfolgt.

Im Folgenden werden mehrere Varianten zur Durchführung des erfindungsgemäßen Verfahrens zur Herstellung von Polyoxymethylen-Blockcopolymeren durch Anlagerung von Alkylenoxiden und gegebenenfalls weiteren Comonomeren an polymere Formaldehydverbindungen in Gegenwart einer die H-funktionelle Startersubstanz beschrieben. Die Darstellung ist lediglich beispielhaft und nicht als die vorliegende Erfindung beschränkend zu verstehen.

Das erfindungsgemäße Verfahren ist dadurch gekennzeichnet, dass im ersten Schritt (i) die Mischung (i) umfassend den DMC-Katalysator und der H-funktionelle Startersubstanz in einem Reaktor vorgelegt wird, wobei die theoretische Molmasse der polymeren Formaldehydverbindung kleiner ist als die theoretische Molmasse der H-funktionellen Startersubstanz und wobei die theoretische Molmasse der H-funktionellen Startersubstanz mindestens 500 g/mol beträgt.

Es kann grundsätzlich auch ein Gemisch aus unterschiedlichen erfindungsgemäßen H-funktionellen Startersubstanzen und/oder erfindungsgemäßen DMC-Katalysatoren verwendet werden.

Hierbei kann die im erfindungsgemäßen Verfahren verwendete H-funktionelle Startersubstanz in einem vorgeschalteten Reaktionsschritt in Gegenwart des erfindungsgemäßen DMC-Katalysators, bevorzugt des erfindungsgemäßen DMC-Katalysators (A) hergestellt werden. Alternativ kann der erfindungsgemäße DMC-Katalysator, bevorzugt der erfindungsgemäße DMC-Katalysator (B), auch nach Herstellung der H-funktionelle Startersubstanz zugeben werden. so dass die Mischung (i) resultiert. In einer weiteren Ausführungsform kann die Herstellung der H-funktionelle Startersubstanz in Gegenwart des erfindungsgemäßen DMC-Katalysators (A) erfolgen und im Anschluss wird noch erfindungsgemäßer DMC-Katalysator (B) zu der Mischung aus DMC-Katalysators (A) und H-funktionelle Startersubstanz hinzugegeben, so dass die Mischung (i) resultiert.

Schritt (ii) des erfindungsgemäßen Verfahrens ist dadurch gekennzeichnet dass die polymeren Formaldehydverbindung zu Mischung (i) zugegeben wird (i) unter Bildung einer Mischung (ii). Gegebenenfalls werden Wasser und/oder andere leicht flüchtige Verbindungen dieser Mischung (ii) durch erhöhte Temperatur und/oder reduzierten Druck entfernt ("Trocknung"), wobei zusätzlicher DMC-Katalysator (B) der polymeren Formaldehydverbindung oder dem Suspensionsmittel vor oder nach der Trocknung zugesetzt wird. Die polymere Formaldehydverbindung kann hierbei grundsätzlich als Gemisch mit weiteren polymeren Formaldehydverbindungen vorgelegt werden, welche dann die Mischung (ii) ergibt.

In einer bevorzugten Ausführungsform des erfindungsgemäßen Verfahrens erfolgt Schritt (ii) zeitlich vor Schritt (iii).

In Schritt (iii) des erfindungsgemäßen Verfahrens erfolgt die Zugabe des Alkylenoxids.

In einer bevorzugten Ausführungsform des erfindungsgemäßen Verfahrens hat sich gezeigt, dass die Polymerisation zur Herstellung des Polyetherblockes in den Polyoxymethylen-Polyoxyalkylen-Blockcopolymeren (Schritt (iii)) vorteilhafterweise bei 50 bis 150 °C, bevorzugt bei 60 bis 145 °C, besonders bevorzugt bei 70 bis 140 °C und ganz besonders bevorzugt bei 70 °C bis 130 °C durchgeführt wird.

Werden Temperaturen unterhalb von 50 °C eingestellt, läuft die Reaktion unverhältnismäßig langsam ab. Bei Temperaturen oberhalb von 150 °C steigt die Menge an unerwünschten Nebenprodukten stark an.

Optional kann in Schritt (iii) zur weiteren Aktivierung des DMC-Katalysators in Gegenwart der polymeren Formaldehydverbindung eine Teilmenge (bezogen auf die Gesamtmenge der bei der Aktivierung und Polymerisation eingesetzten Menge an Alkylenoxiden) von einem oder mehreren Alkylenoxiden zu der Mischung (ii) zugesetzt wird, wobei diese Zugabe einer Teilmenge an Alkylenoxid gegebenenfalls in Gegenwart von weiteren Comonomeren, wie insbesondere CO₂, erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (iii) zur Aktivierung auch mehrfach erfolgen kann.

In einer weiteren Ausführungsform des erfindungsgemäßen Verfahrens erfolgt die Polymerisation der Alkylenoxide in Schritt (iii) Gegenwart eines weiteren Comonomers. Als weitere Comonomere können beispielsweise alle sauerstoffhaltigen cyclischen Verbindungen, insbesondere zyklische Ether, wie z.B. Oxetan, THF, Dioxan oder zyklische Acetale wie z.B. 1,3-Dioxolan oder 1,3-Dioxepan, zyklische Ester wie z.B. Propiolacton, γ-Butyrolacton, γ-Valerolacton, ε-Caprolacton, oder zyklische Säureanhydride wie z.B. Maleinsäureanhydrid, Glutarsäureanhydrid oder Phthalsäureanhydrid sowie Kohlendioxid zum Einsatz kommen. Bevorzugt wird als Comonomer Kohlendioxid eingesetzt.

Die Dosierung weiterer Co-Monomere kann in Reinsubstanz, in Lösung oder als Mischung mit einem oder mehreren Alkylenoxiden erfolgen. Die Dosierung weiterer Co-Monomere kann ebenfalls parallel zu der Dosierung oder im Anschluss an die Dosierung der Alkylenoxide erfolgen.

Die Dosierung eines oder mehrerer Alkylenoxide kann simultan oder sequentiell über jeweils separate Dosierungen (Zugaben) oder über eine oder mehrere Dosierungen erfolgen. Werden mehrere Alkylenoxide zur Synthese der Polyoxymethylen-Blockcopolymere eingesetzt, so können die Alkylenoxide einzeln oder als Gemisch dosiert werden.

In einer weiteren Ausführungsform des erfindungsgemäßen Verfahrens erfolgt die Polymerisation in Gegenwart wenigstens eines Comonomers. Die Dosierung der weiteren Comonomere kann in Reinsubstanz, in Lösung oder sonst in jeglichen technisch-realisierbaren Formen erfolgen. Die Dosierung eines oder mehrerer Alkylenoxide und der Co-Monomere kann simultan oder sequentiell erfolgen, wobei die gesamte Menge an Co-Monomer auf einmal oder dosiert über die Reaktionszeit zugegeben werden kann. In einer bevorzugten Ausführungsform der Erfindung wird Kohlendioxid als Comonomer eindosiert. Die Dosierung eines oder mehrerer Alkylenoxide erfolgt simultan oder sequentiell zur Kohlendioxid-Dosierung. Über die Art der Dosierung der Alkylenoxide und der Comonomere, vorzugsweise Kohlendioxid, ist es möglich, Polyoxymethylen-Blockcopolymere mit statistischen, alternierenden, blockartigen oder gradientenartigen Polyether- und/oder Polyoxyalkylencarbonat -Blöcken zu synthetisieren.

Die drei Schritte (i), (ii) und (iii) können in demselben Reaktor oder jeweils separat in unterschiedlichen Reaktoren durchgeführt werden. Besonders bevorzugte Reaktortypen für das erfindungsgemäße Verfahren sind Rührkessel, Rohrreaktor, und Schlaufenreaktor. Werden die Reaktionsschritte (i), (ii) und (iii) in unterschiedlichen Reaktoren durchgeführt, kann für jeden Schritt ein unterschiedlicher Reaktortyp verwenden werden. Bei einer vollständig kontinuierlichen Reaktionsführung sind bevorzugt die einzelnen Schritte bzw. die Schritte (i) und (ii) von (iii) räumlich voneinander zu trennen, so dass eine getrennte Temperaturführung sowie eine geeignete Gaszufuhr und Anlegen von Unterdruck, Zugabe von polymerem Formaldehyd und Dosierung von Monomeren in den Einzelschritten erfindungsgemäß möglich ist.

Ein weiterer Gegenstand der vorliegenden Erfindung sind Polyoxymethylen-Polyoxyalkylen-Blockcopolymer, erhältlich durch das erfindungsgemäße Verfahren, wobei die Polyoxymethylen-Polyoxyalkylen-Blockcopolymere bevorzugt einen Polydispersitätsindex von 1,20 bis 2,5 aufweisen.

Das Molekulargewicht der erfindungsgemäßen Polyoxymethylen-Polyoxyalkylen-Blockcopolymer ergibt sich insbesondere additiv aus den Molekulargewichten der polymeren Formaldehydverbindung und der aufpolymerisierten Blöcke, die durch die Umsetzung mit Alkylenoxid entstehen.

In einer Ausführungsform weisen die Polyoxymethylen-Polyoxyalkylen-Blockcopolymer ein zahlenmittleres Molekulargewicht von ≤ 15000 g/mol, bevorzugt ≤ 9500 g/mol, besonders bevorzugt ≤ 6000 g/mol, ganz besonders bevorzugt ≤ 5000 g/mol, insbesondere von 200 g/mol bis 9500 g/mol, bevorzugt von 500 g/mol bis 5000 g/mol auf.

Das Gewichts- und Zahlenmittel des Molekulargewichts der Polyoxymethylen-Polyoxyalkylen-Blockcopolymer wird mittels Gel-Permeations-Chromatographie (GPC) bestimmt. Es wird in Anlehnung an DIN 55672-1 vorgegangen: "Gelpermeationschromatographie, Teil 1 - Tetrahydrofuran als Elutionsmittel". Dabei werden Polystyrolproben bekannter Molmasse zur Kalibrierung verwendet.

Die über das erfindungsgemäße Verfahren erhältlichen Polyoxymethylen-Polyoxyalkylen-Blockcopolymer besitzen eine Blockstruktur umfassend einen inneren Polyoxymethylen-Block (B), umfassend wenigstens zwei und höchstens 1000 Oxymethyleneinheiten, bevorzugt wenigstens 2 und höchstens 400 Oxymethyleneinheiten, besonders bevorzugt von 8 bis 200, und ganz besonders bevorzugt wenigstens 8 und höchstens 100 Oxymethyleneinheiten, sowie wenigstens einen äußeren oligomeren Polyoxyalkylen-Block (A), welcher bevorzugt einen Anteil von wenigstens 25 mol%, besonders bevorzugt wenigstens 50 mol-% Polyoxyalkyleneinheiten, bezogen auf die Gesamtmenge aller Oligomereneinheiten in diesem Block, umfasst. Die Anzahl an äußeren oligomeren Blöcken (A) resultiert entsprechend aus der Funktionalität der eingesetzten Formaldehydverbindung. Vorzugsweise besteht das Polyoxymethylen-Polyoxyalkylen-Blockcopolymer ausschließlich aus den Blöcken A und B.

Die erfindungsgemäßen Polyoxymethylen-Polyoxyalkylen-Blockcopolymere besitzen vorzugsweise terminale Hydroxy-Gruppen und haben vorzugsweise eine Funktionalität F ≥ 2 (Anzahl an Hydroxy-Gruppen pro Molekül).

In einer weiteren Ausführungsform der Polyoxymethylen-Polyoxyalkylen-Blockcopolymere haben diese eine monomodale Molekulargewichtsverteilung und einen Polydispersitätsindex (PDI) von ≤ 2,5, bevorzugt ≤ 2,2, wobei der Polydispersitätsindex sich aus dem der Quotienten des gewichtsmittleren und zahlenmittleren Molekulargewichtes berechnet wird.

Die nach dem erfindungsgemäßen Verfahren erhältlichen Polyoxymethylen-Polyoxyalkylen-Blockcopolymer enthalten vorzugsweise weniger als 2 Gew.-%, insbesondere weniger als 1 Gew.-% bezogen auf die Gesamtmasse des erhaltenen Polyoxymethylen-Polyoxyalkylen-Blockcopolymer Formiat und/oder Methoxy-Verunreinigungen.

Die nach dem erfindungsgemäßen Verfahren erhältlichen Polyoxymethylen-Polyoxyalkylen-Blockcopolymere weisen im Allgemeinen einen geringen Gehalt an Neben- und Zersetzungsprodukten, wie Formiat, Methoxy-Spuren, monomeres und oligomeres Formaldehyd, Restmonomere auf und können problemlos verarbeitet werden, insbesondere durch Umsetzung mit Di-, Tri und/oder Polyisocyanaten zu Polyurethanen, Isocyanat-funktionalisierten Polyurethan-Präpolymeren oder Polyisocyanuraten, insbesondere Polyurethan-Thermoplasten, Polyurethan-Beschichtungen, -Fasern, -Elastomeren, -Klebstoffen sowie insbesondere auch PolyurethanSchaumstoffen eingeschlossen Weich- (wie beispielsweise Polyurethan-Weichblockschaumstoffe und Polyurethan-Weichformschaumstoffe) und Hartschäume. Für Polyurethananwendungen werden vorzugsweise Polyoxymethylen-Polyoxyalkylen-Blockcopolymer eingesetzt, welche eine Funktionalität von mindestens 2 aufweisen. Des Weiteren können die nach dem erfindungsgemäßen Verfahren erhältlichen Polyoxymethylen-Polyoxyalkylen-Blockcopolymer in Anwendungen wie Wasch- und Reinigungsmittelformulierungen, Klebstoffen, Farben, Lacken, Funktionsfluiden, Bohrflüssigkeiten, Kraftstoffadditiven, ionischen und nicht-ionischen Tensiden, Schmiermitteln, Prozesschemikalien für die Papier- oder Textilherstellung oder kosmetischen / medizinischen Formulierungen verwendet werden. Dem Fachmann ist bekannt, dass abhängig vom jeweiligen Anwendungsgebiet die zu verwendenden Polymere gewisse Stoffeigenschaften wie beispielsweise Molekulargewicht, Viskosität, Polydispersität, Funktionalität und/oder Hydroxylzahl (Anzahl an terminalen Hydroxy-Gruppen pro Molekül) erfüllen müssen.

### Polyurethan-Polymere

Die Erfindung betrifft daher ebenfalls die Verwendung von erfindungsgemäßen Polyoxymethylen-Polyoxyalkylen-Blockcopolymere zur Herstellung von Polyurethan-Polymeren. In einer Ausführungsform dieser Verwendung sind die Polyurethan-Polymere Polyurethan-Weichschaumstoffe oder Polyurethan-Hartschaumstoffe. In einer weiteren Ausführungsform dieser Verwendung sind die Polyurethan-Polymere thermoplastische Polyurethan-Polymere.

Gegenstand der Erfindung ist daher ebenfalls ein Polyurethan-Polymer erhältlich durch Umsetzung eines Di-, Tri- und/oder Polyisocyanats mit wenigstens einem erfindungsgemäßen Polyoxymethylen-Polyoxyalkylen-Blockcopolymer.

Gegenstand der Erfindung ist ebenfalls ein Polyurethan-Weichschaumstoff oder ein Polyurethan-Hartschaumstoff erhältlich durch Umsetzung eines Di-, Tri- und/oder Polyisocyanats mit wenigstens einem erfindungsgemäßen Polyoxymethylen-Polyoxyalkylen-Blockcopolymer. Erfindungsgemäß eingeschlossen ist auch die Verwendung von Polyoxymethylen-Polyoxyalkylen-Blockcopolymer gemäß der vorliegenden Erfindung zur Herstellung von Polyurethanen, Wasch- und Reinigungsmittelformulierungen, Bohrflüssigkeiten, Kraftstoffadditiven, ionischen und nicht-ionischen Tensiden, Schmiermitteln, Prozesschemikalien für die Papier- oder Textilherstellung oder kosmetischen Formulierungen.

### Beispiele

### Eingesetzte Verbindungen:

Es wurde Paraformaldehyd (Granuform M ®) der Firma Ineos eingesetzt. Propylenoxid wurde von Sigma-Aldrich bezogen und ohne Aufreinigung eingesetzt. Als DMC-Katalysator wurde bei allen Beispielen DMC-Katalysator hergestellt gemäß Beispiel 6 in WO 01/80994 A1, enthaltend Zinkhexacyanocobaltat, tert.-Butanol und Polypropylenglykol mit einem zahlenmittleren Molekulargewicht von 1000 g/mol, eingesetzt.

### Methodenbeschreibung

### ¹H-NMR

Die Zusammensetzung des Polymers wurde mittels ¹H-NMR (Firma Bruker, DPX 400, 400 MHz; Pulsprogramm zg30, Wartezeit D1: 10s, 64 Scans) bestimmt. Die Probe wurde jeweils in deuteriertem Chloroform gelöst. Die relevanten Resonanzen im ¹H-NMR (bezogen auf TMS = 0 ppm) und die Zuordnung der Flächenintegrale (A) ergeben sich wie folgt:
- cyclisches Propylencarbonat (cPC), Nebenprodukt, mit Resonanz bei 4,5 ppm, Flächenintegral entspricht einem H-Atom;
- monomeres Propylenoxid (PO), welches nicht abreagiert vorliegt, mit Resonanz bei 2,4 bzw. 2,75 ppm, Flächenintegral entspricht jeweils einem H-Atom;
- Polypropylenoxid (PPO), PO-Homopolymer, mit Resonanzen bei 1,0 bis 1,2 ppm, Flächenintegral entspricht 3 H-Atomen;
- Poly- bzw. Paraformaldehyd (pFA) mit Resonanzen bei 4,6 bis 5,2 ppm, Flächenintegral minus ein H-Atom des cyclischen Propylencarbonats (cPC) entspricht somit 2 H-Atomen;

Die Ermittlung der Molenanteile (x) der Reaktionsmischung erfolgt wie folgt:
- x(cPC) = A(4,5 ppm)
- x(PO) = A(2,75 ppm) oder A(2,4 ppm)
- x(PPO) = A(1,0-1,2 ppm)/3
- x(pFA) = (A(4,6-5,2 ppm) - x(cPc) - x(lPC))/2

Der prozentuale Molanteil wird errechnet, in dem der Molanteil (x) der jeweiligen Komponente durch die Summe der in der Probe enthaltenen Molteile geteilt wird. Zusätzlich wird der Gewichtsanteil berechnet, in dem die Molanteile (x) mit den zugehörigen Molmassen multipliziert werden und durch die Summe der enthaltenen Gewichtsteile geteilt wird. Zur Umrechnung der Gewichtsanteile werden folgende Molmassen (g/mol) verwendet: cPC = 102, PO und PPO = 58, pFA = 30. Die Polymerzusammensetzung wird anhand der Anteile PPO und pFA berechnet und normiert, so dass auch hier die Angabe in Gewichtsteilen von 100 (Gew.-%) erfolgt.

### GPC

Das Gewichts- und Zahlenmittel des Molekulargewichts Mw und Mn der entstandenen Polymere wurde mittels Gel-Permeations-Chromatographie (GPC) bestimmt. Es wurde in Anlehnung an DIN 55672-1 vorgegangen: "Gelpermeationschromatographie, Teil 1 - Tetrahydrofuran als Elutionsmittel". Dabei wurden Polystyrolproben bekannter Molmasse zur Kalibrierung verwendet. Der Polydispersitätsindex berechnet sich aus dem der Quotienten des gewichtsmittleren und zahlenmittleren Molekulargewichtes.

### Beispiel 1 (Vergleich): Herstellung des Polyoxymethylen-Polyalkylenoxid-Blockcopolymer (A-1) als H-funktionelle Startersubstanz DMC-Gesamtkatalysatorbeladung von 2000 ppm

1400 mg getrockneter DMC-Katalysator, der nicht aktiviert ist, wurde in 200,0 g 4-Methyl-2-oxo-1,3-dioxolan (im Folgenden auch als cyclisches Propylencarbonat oder cPC bezeichnet) in einem 1,0 L Druckreaktor mit Gasdosierungseinrichtung suspendiert. Die Suspension wurde unter Rühren (500 rpm) auf 130 °C erhitzt. Gleichzeitig wurde für 30 min ein Vakuum angelegt und der Druck mit einem konstanten Volumenstrom mit Stickstoff durch den Reaktor auf 100 mbar eingestellt (Vakuumstrippen). Nach beendetem Vakuumstrippen wurde die Vakuumpumpe deaktiviert und der Reaktor auf Raumtemperatur abgekühlt und mittels Stickstoff auf Umgebungsdruck eingestellt. Zu der Suspension wurden 157,2 g Paraformaldehyd hinzugefügt und der Reaktor erneut verschlossen. Die Reaktorinnentemperatur wurde auf 70 °C eingestellt. Zu der Suspension wurden 160 g Propylenoxid mit einer Förderrate von 10 g/min schnell addiert. Nach beendeter Zugabe und Erreichen eines konstanten Drucks (Zeitpunkt t0) wurde abgewartet, bis eine exotherme Reaktion im Reaktor verbunden mit gleichzeitigem Druckabfall (Zeitpunkt t1) beobachtet werden konnte. Die Zeitspanne zwischen Zugabe (t0) und einsetzender Reaktion (t1) wird im Folgenden als Aktivierungszeit (tₐₖₜ) bezeichnet. Nach dem Abklingen der exothermen Reaktion wurde die restliche Menge Propylenoxid (362,8 g) mit einer Förderrate von 3 g/min hinzugefügt. Nach beendeter Zugabe wurde bis zum Abklingen der exothermen Reaktion und bis zur Druckkonstanz bei 70 °C gerührt. Das mittlere Molekulargewicht (bestimmt mittels Gelpermeationschromatographie) und die Aktivierungszeit sind in der Tabelle 1 angegeben. Das Produkt wurde im Anschluss an einem Dünnschichtverdampfer (150 °C, 0,05 mbar) vom cPC befreit und das Reaktionsprodukt wird im Folgenden als Polyoxymethylen-Polyalkylenoxid-Blockcopolymer (A-1) bezeichnet.

### Beispiel 2: Herstellung eines Polyoxymethylen-Polyoxyalkylen-Blockcopolymers (A-2) unter Einsatz des Polyoxymethylen-Polyalkylenoxid-Blockcopolymers (A-1) mit einer DMC-Gesamtkatalysatorbeladung von 667 ppm

In einem 300 mL Druckreaktor mit Gas- und Flüssigkeitsdosiereinrichtung wurden 21,6 g Paraformaldehyd (21,6 g) in 45 g des oben hergestellten Polyoxymethylen-Polyalkylenoxid-Blockcopolymers (A-1) suspendiert. Die Suspension wurde insgesamt dreimal unter Rühren bei Raumtemperatur mit 25 bar N₂ beaufschlagt und der Druck anschließend auf 5 bar Stickstoff reduziert (Druckstrippen). Nach Abschluss des Druckstrippens wurde ein Druck von 10 bar mit Stickstoff eingestellt. Im Anschluss daran wurde die Gesamtmenge des Propylenoxids (68,4 g) in den Reaktor hinzugefügt. Die Reaktorinnentemperatur wurde auf 70 °C eingestellt und die Suspension mit 500 rpm gerührt. Nach Erreichen einer konstanten Temperatur und Drucks (Zeitpunkt t₀) wurde abgewartet, bis eine exotherme Reaktion im Reaktor verbunden mit gleichzeitigem Druckabfall (Zeitpunkt t₁) beobachtet werden konnte. Die Zeitspanne zwischen Erreichen der Solltemperatur (t₀) und einsetzender Reaktion (t₁) wird im Folgenden als Aktivierungszeit (tₐₖₜ) bezeichnet. Nach dem Abklingen der exothermen Reaktion wurde bis zum Abklingen der exothermen Reaktion und bis zur Druckkonstanz bei 70 °C gerührt. Das mittlere Molekulargewicht (bestimmt mittels Gelpermeationschromatographie) und die Aktivierungszeit sind in der Tabelle 1 angegeben.

### Beispiel 3: Herstellung eines Polyoxymethylen-Polyoxyalkylen-Blockcopolymers (A-3) unter Einsatz des Polyoxymethylen-Polyalkylenoxid-Blockcopolymers (A-2) mit einer DMC-Gesamtkatalysatorbeladung von 222 ppm

Entsprechend des Beispiels 2 wurde ein Polyoxymethylen-Polyoxyalkylen-Blockcopolymer (A-3) hergestellt, wobei anstelle des Polyoxymethylen-Polyalkylenoxid-Blockcopolymers (A-1) hier das Produkt aus Beispiel 2 (A-2) als Lösungsmittel verwendet wurde.

### Beispiel 4: Herstellung eines Polyoxymethylen-Polyoxyalkylen-Blockcopolymers (A-4) unter Einsatz des Polyoxymethylen-Polyalkylenoxid-Blockcopolymers (A-3) mit einer DMC-Gesamtkatalysatorbeladung von 500 ppm

Entsprechend des Beispiels 3 wurde ein Polyoxymethylen-Polyoxyalkylen-Blockcopolymer hergestellt, wobei anstelle des Produktes aus Beispiel 2 (A-2) das Produkt aus Beispiel 3 (A-3) als Lösungsmittel verwendet wurde. Darüber hinaus wurde 0,058 g DMC Katalysator zur anfänglichen Suspension hinzugefügt.

### Beispiel 5 (Vergleich): Herstellung eines Polyoxymethylen-Polyoxyalkylen-Blockcopolymers unter Verwendung von 1000 ppm DMC-Katalysator und Toluol als Lösungsmittel

500 mg getrockneter DMC-Katalysator, der nicht aktiviert ist, wurde in 250,0 g Toluol in einem 1,0 L Druckreaktor mit Gasdosierungseinrichtung suspendiert. Die Suspension wurde unter Rühren (500 rpm) auf 130 °C erhitzt. Es wurden 40 bar N₂ aufgepresst und anschließend der N₂ Druck auf 15 bar gesenkt. Das Aufpressen und Ablassen von N₂ wurde in gleicher Weise noch zweimal durchgeführt (Druckstrippen). Nach beendetem Druckstrippen wurde der Reaktor auf Raumtemperatur abgekühlt und mittels Stickstoff auf Umgebungsdruck eingestellt. Zu der Suspension wurden 112,3 g Paraformaldehyd hinzugefügt und der Reaktor erneut verschlossen. Anschließend erfolgte erneutes Druckstrippen bei Raumtemperatur. Die Reaktorinnentemperatur wurde auf 70 °C eingestellt. Nach Erreichen der Temperatur wurde zu der Suspension 120 g Propylenoxid mit einer Förderrate von 10 g/min schnell addiert (Aktivierung). Nach beendeter Zugabe und Erreichen eines konstanten Drucks (Zeitpunkt t₀) wurde abgewartet, bis eine exotherme Reaktion im Reaktor verbunden mit gleichzeitigem Druckabfall (Zeitpunkt t₁) beobachtet werden konnte. Die Zeitspanne zwischen Zugabe (t₀) und einsetzender Reaktion (t₁) wird im Folgenden als Aktivierungszeit (tₐₖₜ) bezeichnet. Nach dem Abklingen der exothermen Reaktion wurde die Reaktortemperatur auf 100 °C erhöht und die restliche Menge Propylenoxid (376,7 g) mit einer Förderrate von 3 g/min hinzugefügt. Nach beendeter Zugabe wurde bis zum Abklingen der exothermen Reaktion und bis zur Druckkonstanz bei 70 °C gerührt. Das mittlere Molekulargewicht (bestimmt mittels Gelpermeationschromatographie) und die Aktivierungszeit sind in der Tabelle 1 angegeben.

### Beispiel 6 (Vergleich): Herstellung eines Polyoxymethylen-Polyoxyalkylen-Blockcopolymers unter Verwendung von 500 ppm DMC-Katalysator und Toluol als Lösungsmittel

Entsprechend des Beispiels 4 sollte ein Polyoxymethylen-Polyoxyalkylen-Blockcopolymer hergestellt werden, wobei zu Beginn der Reaktion lediglich 250 mg Katalysator in den Reaktor hinzugefügt wurden (500 ppm Katalysatorbeladung). Nach Hinzufügen der 120 g Propylenoxid während der Aktivierung konnte über einen Zeitraum von 8 Stunden weder eine exotherme Reaktion noch ein Druckabfall beobachtet werden.

**Tabelle 1**

| Beispiel | Suspensionsmittel^{a)}/H-funktionelle Startersubstanz^{b)} | tₐₖₜ [min] | Katalysatorbeladung^{c)} [ppm] | Mn (GPC, g/mol)^{d)} | PDI |
|---|---|---|---|---|---|
| 1 (A-1) (Vgl.) | cPC ^{a)} | 142 | 2000 | 2784 | 1,06 |
| 2 (A-2) | (A-1) ^{b)} | 15 | 667 | 2828 | 1,26 |
| 3 (A-3) | (A-2) ^{b)} | 130 | 222 | 2889 | 1,52 |
| 4 (A-4) | (A-3) ^{b)} | 40 | 500 | 2825 | 1,41 |
| 5 (Vgl.) | Toluol ^{a)} | 128 | 810 | 3441 | 1,21 |
| 6 (Vgl.) | Toluol ^{a)} | >480 | 404 | Kein Polymer ^{e)} | - |

| | | | | | |
|---|---|---|---|---|---|
| ^{a)} Suspensionsmittel, ^{b)} H-funktionelle Startersubstanz ^{c)} DMC-Katalysatorbeladung bezogen auf die Summe der Massen der polymeren Formaldehydverbindung, des Alkylenoxids und der H-funktionellen Startersubstanz ^{d)} zahlenmittleres Molekulargewicht des Polyoxymethylen-Polyoxyalkylen-Blockcopolymers ^{e)}kein kettenverlängertes Produkt | | | | | |

In Tabelle 1 sind die Resultate für die Herstellung der nach dem erfindungsgemäßen Verfahren hergestellten Polyoxymethylen-Polyoxyalkylen-Blockcopolymeren in den Beispielen 2 bis 4 im Vergleich zu den nicht-erfindungsgemäßen Blockcopylmeren in den Beispielen 1, 5 und 6 zusammengefasst.. Hierbei spiegelt Vergleichsbeispiel 5 die Lehre von Beispiel 7 der WO2015/155094 A1 wider. Dabei resultieren für die nach dem erfindungsgemäßen Verfahren hergestellten Polyoxymethylen-Polyoxyalkylen-Blockcopolymere deutlich kürzere Aktivierungszeiten mit vergleichbarer Katalysatorbeladung (z.B. Beispiel 2) als für die Vergleichssysteme (z.B. Vergleichsbeispiel 5). Des Weiteren sind auch Umsetzungen zu den Blockcopolymeren bei deutlich geringeren Katalysatorbeladungen (z.B. Beispiel 3) möglich, wohingegen für das nicht-erfindungsgemäße Verfahren auch bei höheren Katalysatorbeladungen (z.B. Vergleichsbeispiel 6) keine Umsetzung der polymeren Formaldehydverbindung mit dem Alkylenoxid mehr erfolgt, so dass keine kettenverlängerten Polyoxymethylen-Polyoxyalkylen-Blockcopolymer Produkte resultieren.

## Patentansprüche

1. Verfahren zur Herstellung eines Polyoxymethylen-Polyoxyalkylen-Blockcopolymers umfassend der Reaktion einer polymeren Formaldehydverbindung mit Alkylenoxiden in Gegenwart eines Doppelmetallcyanid (DMC)-Katalysators und einer H-funktionellen Startersubstanz;
wobei die theoretische Molmasse der polymeren Formaldehydverbindung kleiner ist als die theoretische Molmasse der H-funktionellen Startersubstanz;
wobei die polymere Formaldehydverbindung wenigstens eine terminale Hydroxylgruppe aufweist;
wobei die theoretische Molmasse der H-funktionellen Startersubstanz mindestens 500 g/mol beträgt;
umfassend folgende Schritte:
(i) Vorlegen einer Mischung i) umfassend den DMC-Katalysator und die H-funktionelle Startersubstanz;
(ii) Zugabe der polymeren Formaldehydverbindung zu Mischung i) unter Bildung einer Mischung ii);
(iii) Zugabe des Alkylenoxids;
wobei Schritt (ii) zeitlich simultan oder zeitlich vor Schritt (iii) erfolgt.

2. Verfahren gemäß Anspruch 1, wobei das Polyoxymethylen-Polyoxyalkylen-Blockcopolymers ein zahlenmittleres Molekulargewicht von 1000 g/mol bis 10000 g/mol, bevorzugt von 1000 g/mol bis 8400 g/mol aufweist, wobei das zahlenmittlere Molekulargewicht mittels Gel-Permeations-Chromatographie (GPC) in Anlehnung an DIN 55672-1: "Gelpermeationschromatographie, Teil 1 - Tetrahydrofuran als Elutionsmittel" bestimmt wurde, wobei Polystyrolproben bekannter Molmasse zur Kalibrierung verwendet wurden.

3. Verfahren gemäß Anspruch 1 oder 2, wobei die H-funktionelle Startersubstanz eine oder mehrere Verbindung(en) ist und ausgewählt wird aus der Gruppe bestehend aus Polyoxyalkylenpolyol Polyetherpolyol, Polyesterpolyol, Polycarbonatpolyol, Polyetherpolyesterpolyol, Polyethercarbonatpolyol, Polyetherpolyestercarbonatpolyol, bevorzugt ein Polyetherpolyol.

4. Verfahren gemäß Anspruch 3, wobei die H-funktionelle Startersubstanz ein Polyetherpolyol ist, wobei das Polyetherpolyol ein Polyoxymethylen-Polyoxyalkylen-Blockcopolymer (A) ist.

5. Verfahren gemäß Anspruch 4, wobei das Polyoxymethylen-Polyoxyalkylen-Blockcopolymer (A) hergestellt wird durch Umsetzung einer polymeren Formaldehydverbindung (A) mit Alkylenoxiden (A) in Gegenwart eines Doppelmetallcyanid (DMC)-Katalysators (A).

6. Verfahren gemäß Anspruch 4 oder 5, wobei das Polyoxymethylen-Polyoxyalkylen-Blockcopolymer (A) eine identische Funktionalität wie das Polyoxymethylen-Polyoxyalkylen-Blockcopolymer aufweist und das zahlenmittlere Molekulargewicht des Polyoxymethylen-Polyoxyalkylen-Blockcopolymers (A) um bis zu 20 %, bevorzugt 10% und besonders bevorzugt von 5 % der des Polyoxymethylen-Polyoxyalkylen-Blockcopolymers abweicht, wobei das zahlenmittlere Molekulargewicht mittels Gel-Permeations-Chromatographie (GPC) in Anlehnung an DIN 55672-1: "Gelpermeationschromatographie, Teil 1 - Tetrahydrofuran als Elutionsmittel" bestimmt wurde, wobei Polystyrolproben bekannter Molmasse zur Kalibrierung verwendet wurden.

7. Verfahren gemäß einem der Ansprüche 1 bis 6, wobei der Doppelmetallcyanid (DMC)-Katalysator in einer theoretischen Menge von 100 bis 800 ppm, bevorzugt von 200 bis 700 ppm bezogen auf die Summe der Massen der polymeren Formaldehydverbindung, des Alkylenoxids und der H-funktionellen Startersubstanz eingesetzt wird.

8. Verfahren gemäß einem der Ansprüche 1 bis 7, wobei der Doppelmetallcyanid (DMC)-Katalysator den Doppelmetallcyanid (DMC)-Katalysator (A) gemäß einem der Ansprüche 5 bis 7 und optional einem Doppelmetallcyanid (DMC)-Katalysator (B) umfasst.

9. Verfahren gemäß das Anspruch 8, wobei das Massenverhältnis des Doppelmetallcyanid (DMC)-Katalysators (A) bezogen auf die Summe der Massen von Doppelmetallcyanid (DMC)-Katalysator (A) und Doppelmetallcyanid (DMC)-Katalysator (B) 40 Gew.-% bis 100 Gew.-% beträgt.

10. Verfahren gemäß Anspruch 8, wobei der Doppelmetallcyanid (DMC)-Katalysator den Doppelmetallcyanid (DMC)-Katalysator (A) und den Doppelmetallcyanid (DMC)-Katalysator (B) umfasst und der Doppelmetallcyanid (DMC)-Katalysator (B) zu dem Polyoxymethylen-Polyoxyalkylen-Blockcopolymer (A) gemäß Anspruch 4 bis 8 hinzugegeben wird.

11. Verfahren gemäß einem der Ansprüche 1 bis 10, wobei die polymere Formaldehydverbindung 2 Hydroxylgruppen und 8 bis 100 Oxymethylen-Wiederholungseinheiten (n) oder 3 Hydroxylgruppen und 8 bis 100 Oxymethylen-Wiederholungseinheiten (n) aufweist.

12. Verfahren gemäß einem der Ansprüche 1 bis 11, wobei Schritt (iii) bei einer Temperatur von 50 bis 150 °C erfolgt.

13. Polyoxymethylen-Polyoxyalkylen-Blockcopolymer, erhältlich nach einem Verfahren gemäß einem der Ansprüche 1 bis 12.

14. Polyoxymethylen-Polyoxyalkylen-Blockcopolymer gemäß Anspruch 12 mit einem Polydispersitätsindex von 1,20 bis 2,5.

15. Polyurethan-Polymer erhältlich durch Umsetzung eines Di-, Tri- und/oder Polyisocyanats mit wenigstens einem Polyoxymethylen-Polyoxyalkylen-Blockcopolymer gemäß Anspruch 13 oder 14.
